# FASCICULE DE BREVET EUROPEEN

(11) **EP 4 518 792 B1**
(45) Date de publication et mention de la délivrance du brevet: **20.05.2026**
(21) Numéro de dépôt: 23711797.3
(22) Date de dépôt: 07.03.2023
(51) Int. Cl.: A61C 8/00, A61C 7/18, A61C 7/10

(54) **DISPOSITIF DE DÉPLACEMENT D'UNE MOLAIRE SUPÉRIEURE**
VORRICHTUNG ZUM BEWEGEN EINES OBEREN MOLARS
DEVICE FOR MOVING AN UPPER MOLAR

(30) Priorité: 08.03.2022 CH 2362022; 08.03.2022 FR 2201976
(43) Date de publication de la demande: 12.03.2025
(73) Titulaire: Paradigme SA, 1213 Lancy (CH)
(72) Inventeur: De Baets, Jan, 1290 Versoix (CH)
(74) Mandataire: Bugnion Genève
(86) Numéro de dépôt international: PCT/IB2023/052154
(87) Numéro de publication internationale: WO 2023/170580

(56) Documents cités:
- AU-A- 6 674 274
- KR-A- 20140 140 684
- US-A1- 2012 003 600
- US-A1- 2021 338 378

## Description

### DOMAINE TECHNIQUE ET ART ANTERIEUR

La présente invention se rapporte à un dispositif de déplacement dans le domaine de l'orthodontie, plus particulièrement à un dispositif de déplacement d'une molaire supérieure.

L'invention vise à résoudre un problème d'occlusion dans le sens sagittal des molaires permanentes supérieures et les dents antérieures de celles-ci.

La molaire supérieure présente une faculté à la rotation du fait de son anatomie. En effet :
- Elle comporte trois racines, deux racines vestibulaires et une longue racine palatine, qui forme l'axe autour duquel la molaire supérieure pivote.
- En outre la molaire supérieure comporte quatre cuspides, dont les trois plus importantes forment un triangle, la pointe du triangle étant la cuspide mésio-palatine qui se trouve au droit de la racine palatine.
- De plus dans une occlusion normale, la cuspide mésio-palatine se loge dans la fosse centrale de la molaire inférieure antagoniste.
- Les trois racines de la molaire supérieure se situent dans l'os alvéolaire qui est prise entre deux parois osseuses très denses, appelées l'os corticale ce qui favorise encore sa rotation.
- Enfin les dimensions réduites de la prémolaire mésiale supérieure dans le sens palato-vestibulaire tend à transformer le mouvement de translation mésiale de la molaire supérieure en mouvement de rotation mésiale.
- la forme de la molaire supérieure est trapézoïdale.

La molaire supérieure tend à présenter une rotation mésiale, i.e. vers l'avant, lorsqu'elle est soumise aux contraintes des forces masticatoires. Cette rotation joue un rôle compensatoire naturel pour s'adapter à un problème d'occlusion. L'inventeur a découvert que cette rotation mésiale était une cause indirecte du développement de l'encombrement incisif inférieur. En effet, le fait que les cuspides vestibulaires se trouvent trop en avant dans l'arcade dentaire empêche une occlusion adéquate qui devient source des interférences occlusales produisant des vecteurs de force sur les dents inférieures conduisant à terme à un encombrement incisif inférieur.

L'inventeur a décrit ce phénomène dans les documents De Baets, J. and Chiarini, M.: The Pseudo-Class I, a newly defined type of malocclusion, J. Clin. Orthod 29:73-88, 1995*,* et De Baets, J.: The rote of the upper first molar in lower incisor crowding, J. Clin. Orthod.29: 146 157, 1995*.*

Pour gagner de la place pour la canine et les incisives supérieures, il est généralement mis en œuvre un appareil qui tend à mettre en translation la molaire supérieure afin de la faire reculer. Or il se révèle que ce mouvement de translation n'est pas efficace à long terme. En effet, en déplaçant en translation la molaire supérieure, sa cuspide mésio-palatine sort de la fosse de la molaire inférieure antagoniste.

Au cours du temps, cette cuspide tend à vouloir retrouver son logement dans la fosse centrale et donc à se déplacer vers l'avant, et devient ainsi source indirecte de l'encombrement incisif décrit ci-dessus. Le document US 2021/338378 A1 décrit un dispositif de déplacement de molaires coopérant avec une arche fixée rigidement au palais. Le dispositif comporte une bague montée autour de la molaire à déplacer et un système à vis pour exercer un effort distal sur le molaire. La force exercée est parallèle à l'axe de la vis. Le document AU66742 74A4 décrit un dispositif orthodontique pour élargir le palais qui pousse les dents vers l'extérieur tout en empêchant la rotation des dents.

### EXPOSE DE L'INVENTION

C'est par conséquent un but de la présente demande d'offrir un dispositif de déplacement permettant de déplacer efficacement et durablement une molaire supérieure.

Le but énoncé ci-dessus est atteint par un dispositif de déplacement destiné à être appliqué à une des molaires supérieures configuré pour appliquer au moins un couple à ladite molaire supérieure de sorte qu'elle tende à avoir un mouvement de rotation distale autour de sa racine palatine, l'axe de rotation de la dent étant fixé par le dispositif. L'invention s'applique principalement à la première molaire supérieure mais elle peut être appliquée à la deuxième molaire supérieure.

En effet, en particulier en appliquant une rotation distale à la première molaire supérieure tout en fixant l'axe de rotation, du fait de la forme trapézoïdale de la première molaire supérieure en vue de dessus, de l'espace est libéré entre la molaire et la prémolaire, ce qui permet de remettre en place la canine et les incisives.

L'inventeur a découvert que, dans le cas où la cuspide mésio-palatine est correctement en place dans sa fosse, celle-ci est maintenue dans la fosse lors du déplacement en rotation. Ainsi, après la fin du traitement, la cuspide mésio-palatine n'a plus tendance à avancer et à reproduire l'encombrement incisif inférieure.

Dans le cas où la cuspide mésio-palatine ne serait pas correctement en place dans sa fosse antagoniste, le dispositif prévoit simultanément au déplacement en rotation un déplacement en translation pour replacer la cuspide mésio-palatine dans la fosse antagoniste. Ainsi, également après la fin du traitement, la cuspide mésio-palatine n'a plus tendance à se déplacer et à reproduire l'encombrement incisif.

Le dispositif orthodontique est tel qu'il applique une rotation à une des molaires supérieures autour d'un axe de rotation fixe parallèle et proche de l'axe de rotation naturel de ladite molaire supérieure passant par sa racine palatine et sa cuspide mésio-palatine logée dans la fosse antagoniste.

Le dispositif est destiné à être fixé à la molaire supérieure proche de son axe de rotation naturel, et comporte un axe de rotation fixe, des moyens pour appliquer une force à ladite molaire supérieure de sorte à lui appliquer un couple de rotation autour de l'axe de rotation fixe. Cette force peut être appliquée du côté palatin ou du côté vestibulaire. Cette force peut être exercée par exemple par un ressort de traction, de compression, un ressort de torsion ou des aimants répulsifs.

Dans un mode de réalisation, le dispositif est destiné à être ancré du côté palatin soit dans un os du palais, soit à une ou des dents à proximité de ladite molaire supérieure, par exemple la prémolaire et/ou une molaire de lait.

Dans un autre mode de réalisation, le dispositif est destiné à comprendre un ancrage osseux interdentaire ou à être ancré à l'os zygomatique. En variante, le dispositif comporte une partie externe à la bouche, qui est fixée au crâne ou à la nuque.

Dans un mode de réalisation, le dispositif comporte une bague entourant la molaire et assurant la solidarisation de la première molaire supérieure et du dispositif. Dans un autre mode de réalisation, le dispositif comporte une platine collée sur la molaire.

En d'autres termes, le dispositif selon l'invention dispose d'un centre de rotation fixe proche de l'axe de rotation de la molaire qui permet de maintenir la cuspide mésio-palatine dans la fosse antagoniste. La force générant la rotation peut s'appliquer sur le côté vestibulaire ou palatin.

Il peut être prévu de faire subir à l'axe de rotation un mouvement simultané de rotation distale et de translation distale ou mésiale, qui permet de reloger la cuspide mésio-palatine dans la fosse.

Certains modes de réalisation présentent l'avantage de ne pas requérir de collaboration de la part du patient.

L'un des objets de la présente demande est alors un dispositif de déplacement d'une molaire supérieure comprenant une cuspide mésio-palatine, comportant :
- un support destiné à être fixé à la molaire supérieure,
- une tige comportant une première extrémité destinée à être ancrée à un os du palais ou sur au moins une dent voisine de la molaire supérieure de sorte que, lorsque le dispositif est en place, la tige a une position donnée par rapport à la molaire supérieure,
- une articulation en rotation entre le support et la tige, ladite articulation en rotation comportant un axe de rotation destiné à être fixe par rapport à ladite tige et à être perpendiculaire au plan d'occlusion, ledit axe de rotation étant destiné à être disposé proche de la cuspide mésio-palatine de la molaire supérieure,
- et des moyens configurés pour appliquer un effort apte à appliquer une rotation à ladite molaire supérieure autour de l'axe de rotation, de sorte que ladite molaire supérieure ait une rotation distale, ledit effort étant appliqué soit sur la face palatine de la molaire soit sur une face vestibulaire de la molaire.

Dans un exemple de réalisation, la tige comporte une broche destinée à former l'axe de rotation et le support comporte un logement pour ladite broche ou le support comporte une broche destinée à former l'axe de rotation et la tige porte un logement pour ladite broche, l'ensemble broche et logement formant l'articulation en rotation.

Dans un mode de réalisation, les moyens configurés pour appliquer un effort sur la face palatine de la molaire apte à appliquer une rotation à ladite molaire supérieure comportent au moins un ressort de torsion comportant des spires et deux brins s'étendant radialement, lesdites spires étant montées sur la broche, un brin étant fixé au support et l'autre brin étant fixé à la tige, la fixation de l'autre brin sur la tige provoquant la mise sous charge du ressort.

Le logement peut comporter une ouverture latérale sur sa hauteur, permettant une mise en place des spires par un déplacement transversal du ressort, ledit logement comportant une fente transversale pour le passage du brin fixé au support.

Dans un autre mode de réalisation, les moyens configurés pour appliquer un effort sur la face palatine de la molaire apte à appliquer une rotation à ladite molaire supérieure comportent un ressort de traction destiné à être fixé par une première extrémité destinée à un os du palais ou à un ou des dents voisines, et est fixé au support à un emplacement distinct de celui de l'articulation pivot.

Dans un autre mode de réalisation, les moyens configurés pour appliquer un effort sur la face palatine de la molaire apte à appliquer une rotation à ladite molaire supérieure comportent un ressort de traction monté autour de la tige, fixé par une première extrémité à la tige du côté de sa première extrémité, le dispositif comportant également une barre, dont une extrémité coulisse le long de tige et une extrémité est fixée au support à un emplacement distinct de celui de l'articulation pivot, la deuxième extrémité du ressort étant fixée à l'extrémité de la barre coulissant sur la tige.

Dans un autre mode de réalisation, les moyens configurés pour appliquer un effort sur la face vestibulaire de la molaire aptes à appliquer une rotation à ladite molaire supérieure comportent une pièce articulée en rotation sur le support, ladite pièce étant situé sur la face vestibulaire de la molaire et des moyens élastiques ou des aimants répulsifs exerçant un effort sur ladite pièce articulée. Les moyens configurés pour appliquer un effort sur la face vestibulaire de la molaire peuvent être configurés pour être ancrés entre deux dents ou à l'os zygomatique ou peuvent être extraoraux et être fixés sur le crâne ou la nuque du patient.

Le dispositif de déplacement peut également comporter des moyens configurés pour appliquer un effort apte à déplacer en translation ladite molaire supérieure.

Les moyens configurés pour appliquer un effort apte à déplacer en translation ladite molaire supérieure peuvent comporter un ressort de compression ou des aimants orientés l'un par rapport à l'autre de sorte à se repousser.

Par exemple, la tige comporte une première partie et une deuxième partie configurée pour coulisser l'une par rapport à l'autre et le ressort de compression est monté sur la tige en réaction entre la première partie et la deuxième partie, ou les aimants sont montés sur la première partie et la deuxième partie.

Très avantageusement, la première partie et la deuxième partie ont des sections transversales telles qu'elles empêchent une rotation relative autour de leur axe.

Le support est une bague destinée à être montée autour de la première molaire supérieure et/ ou dans lequel le dispositif de déplacement comporte une platine fixée sur une ou des dents voisines de la première molaire supérieure, à laquelle la première extrémité de la tige est fixée.

### BREVE DESCRIPTION DES FIGURES

La description qui va suivre sera mieux comprise à l'aide des dessins en annexes sur lesquels :
- La figure 1 est une représentation schématique partielle d'une dentition de la mâchoire supérieure,
- La figure 2 est une vue de dessous d'un exemple d'un dispositif de déplacement palatin selon un premier mode de réalisation, le ressort étant dans un état activé,
- La figure 3 est une vue de détail de la figure 2,
- La figure 4 montre des représentations schématiques de ressorts de torsion utilisables dans la présente invention,
- La figure 5 est une représentation du dispositif de déplacement de la figure 2, le ressort étant dans un état désactivé,
- La figure 6 est une vue en perspective d'un autre exemple de dispositif de déplacement palatin selon le premier mode de réalisation (le ressort n'étant pas représenté),
- La figure 7 est une vue en plan d'un autre exemple de dispositif de déplacement palatin selon le premier mode de réalisation,
- La figure 8A est une vue en perspective d'un autre exemple de dispositif de déplacement palatin selon le premier mode de réalisation,
- LA figure 8B est une vue agrandie du logement mis en œuvre du dispositif de la figure 8A,
- La figure 9 est une vue en perspective d'un autre exemple de dispositif de déplacement palatin selon le premier mode de réalisation,
- La figure 10 est une vue en perspective d'un exemple de dispositif de déplacement palatin selon un deuxième mode de réalisation,
- La figure 11A est une vue en perspective d'un exemple de dispositif de déplacement palatin selon un troisième mode de réalisation,
- La figure 11B est une représentation schématique des sections transversales de la tige et du manchon du dispositif de la figure 11A,
- La figure 12 est une vue en perspective d'un autre exemple de dispositif de déplacement palatin selon un troisième mode de réalisation,
- La figure 13 est une vue en plan d'un autre exemple de dispositif de déplacement palatin selon un troisième mode de réalisation,
- La figure 14A est une vue en plan d'un autre exemple de dispositif de déplacement palatin selon un troisième mode de réalisation,
- La figure 14B est une vue en plan d'une variante du dispositif de la figure 14A,
- La figure 15 est une vue en plan d'un autre exemple de dispositif de déplacement palatin selon un troisième mode de réalisation,
- La figure 16A est une représentation schématique d'un autre exemple de dispositif de déplacement palatin selon le deuxième mode de réalisation avant et après la rotation distale,
- La figure 16B est une représentation schématique du dispositif de déplacement palatin de la figure 16A après la rotation distale,
- La figure 17 est une vue de dessus d'un autre exemple d'un ressort de torsion adapté à l'application dans un dispositif de déplacement palatin,
- La figure 18 est une représentation schématique d'un exemple de dispositif de déplacement vestibulaire,
- La figure 19 est une représentation schématique d'un exemple d'une partie des moyens permettant d'exercer un effort de rotation adapté au dispositif de déplacement vestibulaire,
- La figure 20A est une représentation schématique d'un exemple d'une autre partie des moyens permettant d'exercer un effort de rotation adapté au dispositif de déplacement vestibulaire,
- La figure 20B est une représentation schématique d'une variante de réalisation de moyens permettant d'exercer un effort de rotation adapté au dispositif de déplacement vestibulaire,
- La figure 20C est une représentation schématique d'une autre variante de réalisation de moyens permettant d'exercer un effort de rotation adapté au dispositif de déplacement vestibulaire,
- La figure 21 est une représentation schématique d'un autre exemple de dispositif de déplacement vestibulaire,
- La figure 22 est une représentation schématique d'un exemple de dispositif de déplacement vestibulaire,
- La figure 23A est une représentation schématique d'un exemple de dispositif de déplacement vestibulaire,
- La figure 23B est une représentation schématique d'une variante du dispositif de la figure 23A,
- La figure 24A est une vue en perspective d'un autre exemple d'un dispositif de déplacement selon le troisième mode de réalisation,
- la figure 24B est une vue en coupe d'une variante de réalisation d'un manchon du dispositif de la figure 24A,
- la figure 25A est une vue en perspective d'un autre exemple d'un dispositif de déplacement selon le troisième mode de réalisation représenté en transparence,
- la figure 25B est une représentation du dispositif de la figure 25A dans un état désassemblé.

### DESCRIPTION DETAILLES DE MODES DE REALISATION

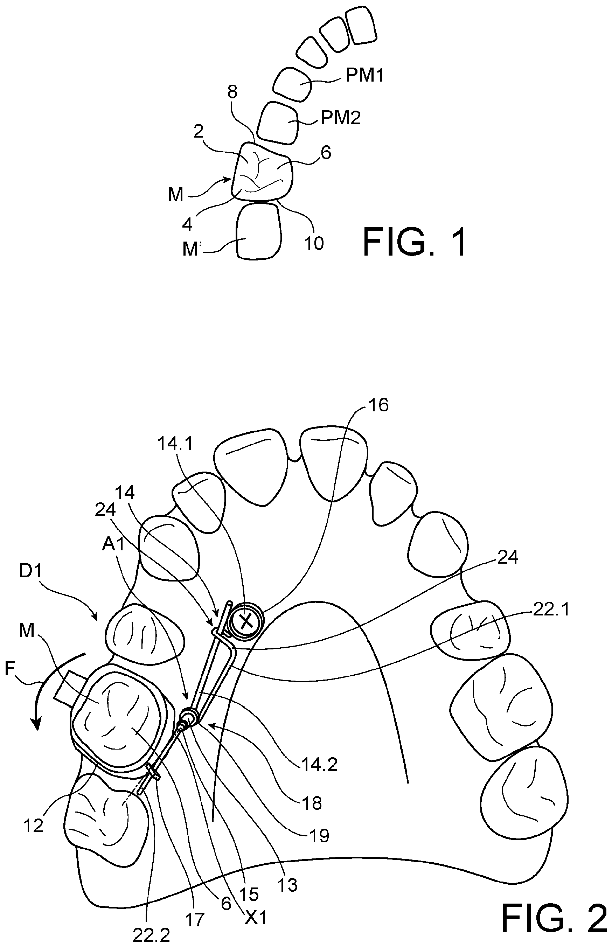

Sur la figure 1, on peut voir un schéma représentant partiellement une dentition de la mâchoire supérieure vue de dessous permettant de définir les différents termes employés dans la description.

L'invention est destinée à exercer au moins un effort de rotation à l'une des molaires supérieures, et est particulièrement adaptée à appliquer un effort de rotation à la première molaire. La description qui va suivre porte sur l'application du dispositif à la première molaire supérieure qui sera désignée par « molaire supérieure » ou « molaire » de manière indifférente. Mais l'invention peut être appliquée à la fois à la première molaire supérieure et à la deuxième molaire supérieure.

L'invention porte sur un dispositif de déplacement qui est configuré pour appliquer un effort du côté palatin de la molaire, qui sera désigné « dispositif de déplacement palatin », et sur un dispositif de déplacement qui est configuré pour appliquer un effort du côté vestibulaire de la molaire, qui sera désigné « dispositif de déplacement vestibulaire ».

La référence M désigne la première molaire supérieure, M' désigne la deuxième molaire supérieure, PM1 et PM2 désignent les prémolaires, PM2 étant la prémolaire mésiale.

La référence 2 désigne la cuspide mésio-vestibulaire et la référence 4 désigne la cuspide disto-vestibulaire, la référence 6 désigne la cuspide mésio-palatine.

La référence 8 désigne la partie mésiale (avant) de la molaire M et la référence 10 désigne la partie distale (arrière) de la molaire. La face vestibulaire de la molaire est la face extérieure et la face palatine est la face intérieure.

Les termes « avant » et « arrière » sont considérés par rapport aux incisives, l'avant étant orienté du côté des incisives et l'arrière étant orienté en éloignement des incisives.

Dans une occlusion de type Classe I, qui est la position de référence, la cuspide mésio-palatine de la première molaire supérieure est logée dans la fosse centrale de la molaire antagoniste.

Sur la figure 2, on peut voir un exemple de dispositif de déplacement palatin D1 selon un premier mode de réalisation vu de dessous.

Le dispositif D1 comporte une bague 12 configurée pour se placer autour de la molaire M et former un cerclage. La bague 12 est par exemple collée sur la molaire M de sorte que la molaire M et la bague 12 soient solidaires en mouvement. Un logement tubulaire 13 d'axe perpendiculaire au plan d'occlusion est fixé sur la face latérale intérieure ou palatine de la bague 12. Le tube tubulaire 13 est positionné sur la bague 12, de sorte qu'une fois en place sur la molaire, il soit proche de la cuspide mésio-palatine.

Le dispositif comporte également un élément 14 destiné à être fixe dans la bouche du patient, désigné « élément fixe 14 » formé par une tige dont une première extrémité 14.1 est destinée à être ancrée dans un os du palais ; il s'agit d'un ancrage osseux. Pour cela, la première extrémité 14.1 comporte une boucle recevant une vis 16 vissée dans le palais. La deuxième extrémité 14.2 de la tige 14 forme une broche 15 configurée pour se loger dans le logement tubulaire 13. La tige 14 est destinée à être immobile par rapport au palais.

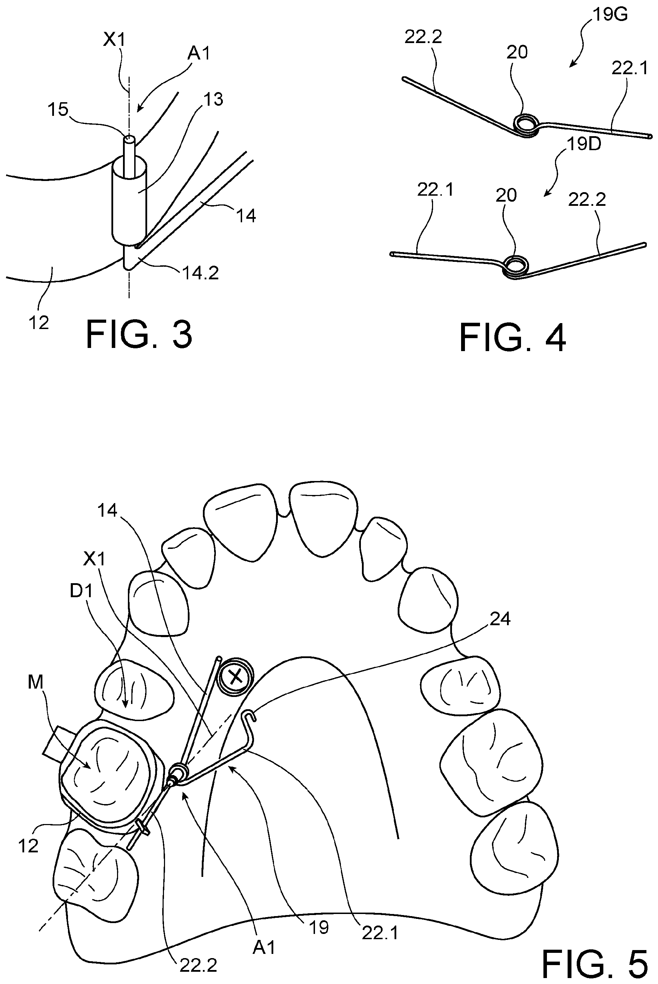

La broche 15 et le logement tubulaire 13 forment une articulation A1 d'axe de rotation X1 fixe. Cet axe de rotation X1 est sensiblement parallèle à l'axe de rotation naturel de la molaire qui passe par la racine palatine et la cuspide mésio-palatine logée dans la fosse antagoniste. L'axe X1 de l'articulation A1 est située au plus près de l'axe de rotation naturel de la molaire. Sur la figure 3, on peut voir une vue agrandie de l'articulation pivot A1.

Le dispositif D1 comporte également des moyens 18 configurés pour exercer un effort sur la molaire de sorte qu'elle ait un mouvement de rotation distal.

On entend par « mouvement de rotation distal » un mouvement de rotation dans lequel la face vestibulaire de la molaire tend à se déplacer vers l'arrière de la mâchoire autour de l'axe de rotation de la molaire, comme cela est schématisé par la flèche F.

Les moyens 18 comportent un ressort de torsion 19.

Sur la figure 4, on peut voir un ressort 19G destiné à agir sur la molaire gauche et un ressort 19D destiné à agir sur la molaire droite. Le ressort de torsion comporte des spires 20 et deux brins 22.1, 22.2 s'étendant radialement. Les spires 20 tendent à rappeler les brins 22.1, 22.2 dans une position repos. De préférence le ressort de torsion est monté sur la bague 12, les spires 20 étant logées dans le logement tubulaire 13 et une extrémité libre du brin 22.2 est reçue dans un fourreau 17 fixé sur la face latérale intérieure de la bague 12. Dans l'exemple représenté, le brin 22.2 est rectiligne.

Comme on peut le voir sur la figure 2, le diamètre intérieur des spires est suffisant pour être monté autour du logement tubulaire et la broche est insérée dans le logement tubulaire. Le dispositif comporte des moyens pour charger le ressort. Dans cet exemple, ces moyens sont formés par un crochet 24 prévu à l'extrémité libre du brin 22.1 orientée du côté de l'ancrage osseux et destiné à venir se fixer sur la tige 14.

Lors de la mise en place du dispositif D1 sur la molaire, le brin 22.1 pivote et le crochet 24 est fixé sur la tige 14 (figure 2). Sur la figure 5, le brin 22.1 n'est pas accroché à la tige 14, le ressort n'est pas activé.

Le fonctionnement du dispositif D1 va maintenant être décrit.

Sur la figure 5, on peut voir une représentation schématique de l'action du dispositif D1 sur la molaire M.

Le ressort de torsion 19 exerce un effort sur la bague 12 dans le sens antihoraire dans la représentation de la figure 5, qui elle-même est guidée en rotation autour de l'axe X1 de l'articulation A1, qui est fixe.

La bague 12 étant solidaire en rotation de la molaire M, la molaire M est entraînée en rotation dans le sens distal, qui correspond dans ce cas à une rotation anti horaire. Du fait de l'axe de rotation fixe X1, la cuspide mésio-palatine est maintenue en position dans la fosse.

La molaire ayant une forme trapézoïdale, ce mouvement de rotation distale dégage de l'espace entre la molaire et la prémolaire. Cet espace permet ensuite d'agir pour replacer la canine et les incisives dans la position souhaitée.

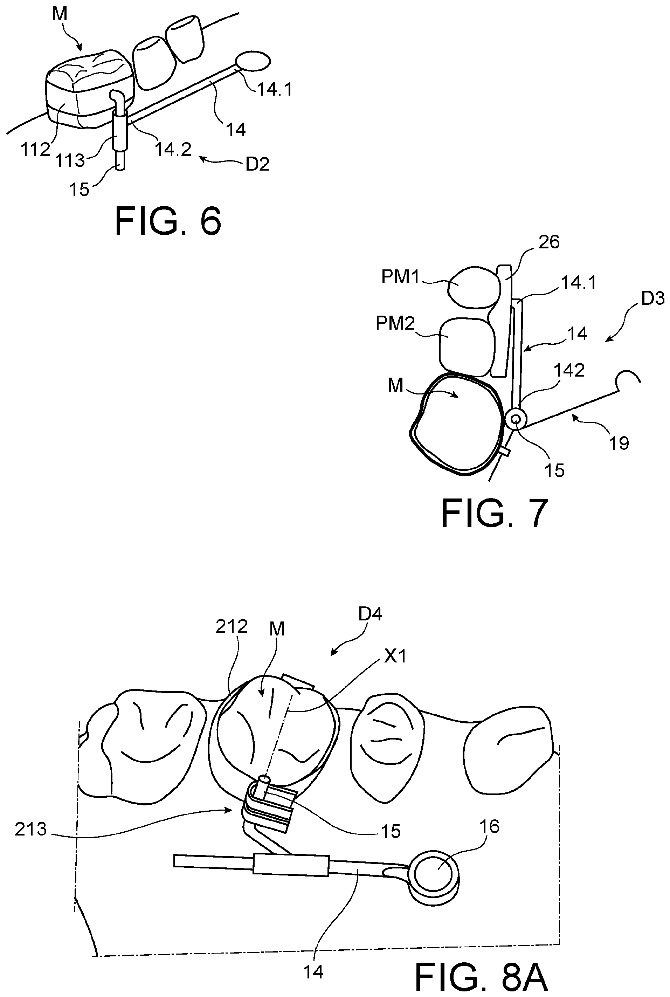

Sur la figure 6, on peut voir un dispositif de déplacement palatin D2 selon une variante de réalisation, dans laquelle le logement tubulaire 113 est fixé à la deuxième extrémité 14.2 de la tige 14 et la broche 15 est fixée sur la face latérale intérieure de la bague 112. Dans cette variante, le logement 113 est reçu dans les spires du ressort de torsion (non représenté).

Selon un autre exemple de réalisation de dispositif de déplacement palatin représenté sur la figure 7, l'ancrage du dispositif D3 ne se fait pas dans l'os du palais mais sur des dents voisines par exemple les première PM1 et deuxième PM2 prémolaires ou une molaire de lait. Dans cet exemple, le dispositif comporte une platine 26 conformée pour être fixée sur la face palatine des prémolaires PM1 et PM2. La tige 14 est fixée par sa première extrémité 14.1 à la platine 26. Le reste du dispositif est similaire à celui du dispositif D1.

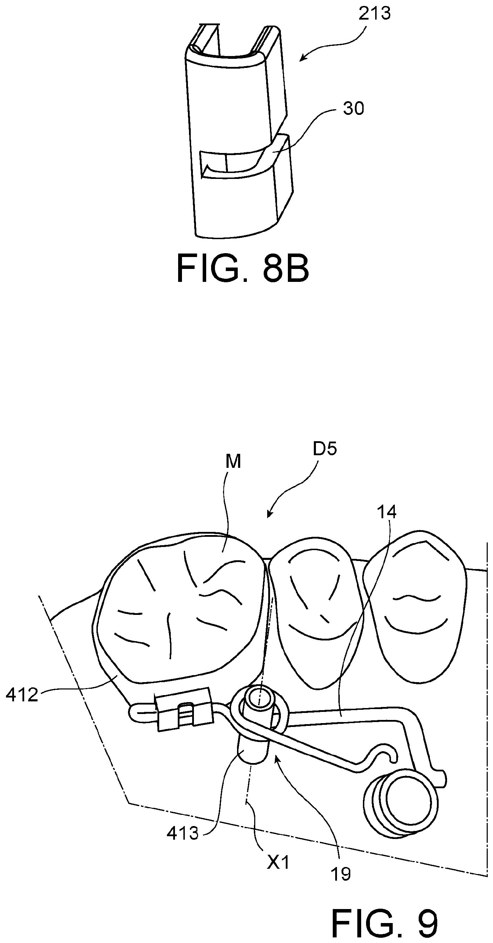

Sur les figures 8A et 8B, on peut voir un dispositif D4 de déplacement palatin selon une autre variante de réalisation dans laquelle le logement 213 est ouvert verticalement de manière à permettre d'y insérer les spires du ressort de torsion (non représenté), le logement 213 forme une sorte de berceau pour la broche 15 et les spires. En outre, la paroi du logement est munie d'une fente transversale 30 pour le passage du brin 22.2 du ressort de torsion. Cette variante de réalisation permet de faciliter le montage de la broche et du ressort.

La bague 212 munie du logement ouvert 213 peut avantageusement être réalisée par fabrication additive, également désignée « impression 3D ».

Sur la figure 9, on peut voir un dispositif de déplacement palatin D5 selon le premier mode de réalisation, dans lequel l'axe de rotation X1 de l'articulation pivot n'est pas directement sur la face interne de la bague 412 mais est décalé. Dans cet exemple le logement 413 est relié rigidement à l'élément fixe 14. L'axe de rotation X1 reste néanmoins proche de la bague et du côté de la cuspide médio-palatine, et donc de l'axe de rotation naturel de la molaire. Les spires du ressort 19 sont montés autour du logement 413. Ce mode de réalisation présente l'avantage de laisser plus de liberté à la cuspide mésio-palatine lorsqu'elle est soumise aux forces masticatoires.

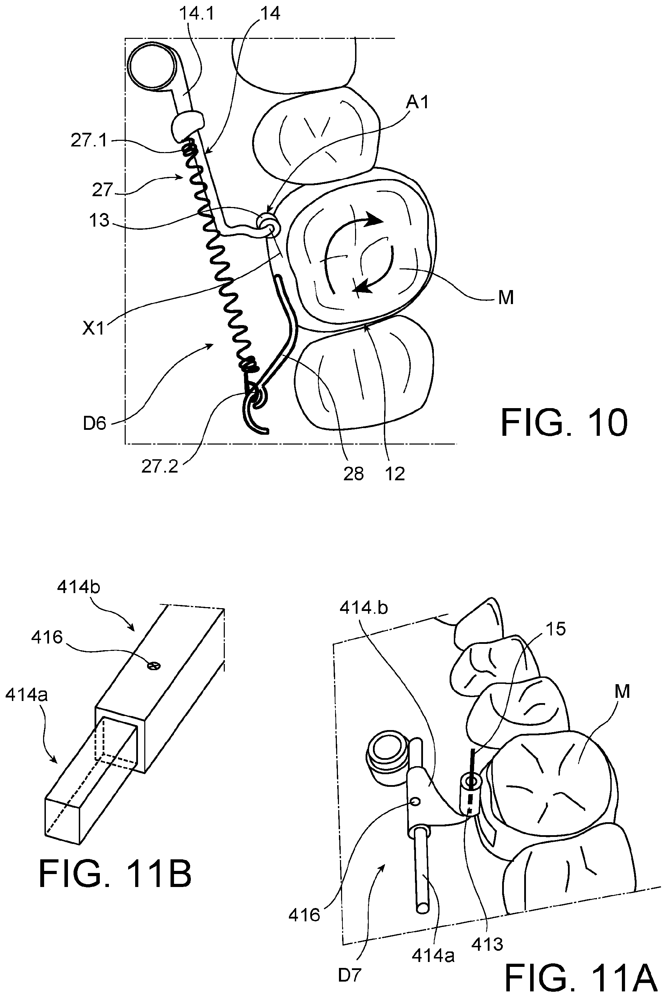

Sur la figure 10, on peut voir un exemple de dispositif de déplacement palatin D6 selon un deuxième mode de réalisation, dans lequel les moyens pour exercer un effort de rotation sur la molaire comportent un ressort de traction 27 fixé par une première extrémité 27.1 sur la tige 14 du côté de la première extrémité 14.1 et par une deuxième extrémité 27.2 sur une barre coudée 28 fixée sur la face latérale intérieure de la bague 12 dans une position reculée par rapport au logement 13.

Le ressort de traction 27 comporte par exemple une boucle à chaque extrémité venant se monter sur une saillie de la tige 14 et sur la barre 28.

Le ressort 27 exerce un effort de traction sur la barre coudée 28 qui entraîne la bague 12 dans le sens horaire dans la représentation de la figure 10 (symbolisé par la flèche) qui, elle-même, est guidée en rotation autour de l'axe X1 de l'articulation A1, qui est fixe.

Dans certaines situations, il peut être souhaitable simultanément à l'application d'une force de rotation à la molaire, d'appliquer une force de sorte à déplacer en translation la molaire pour replacer la cuspide mésio-palatine dans la fosse antagoniste. Dans les exemples du troisième mode de réalisation qui vont être décrits ci-dessous, le dispositif orthodontique permet à la fois une rotation distale de la molaire et un déplacement en translation de la molaire, qui peut être vers l'arrière (translation distale ou distalisation) ou vers l'avant (translation mésiale ou mésialisation)

Sur la figure 11A, on peut voir un exemple d'un dispositif de déplacement palatin D7 selon un troisième mode de réalisation capable à la fois d'appliquer une force de rotation à la molaire et une force de translation.

Le dispositif D7 est similaire au dispositif D1 en ce qui concerne les moyens de mise en rotation de la molaire.

Dans cet exemple, le dispositif D7 comporte un élément fixe 414 comprenant une tige 414a, ancrée par une extrémité, au palais et un manchon 414.b monté coulissant sur la tige 414.a. Le manchon 414.b porte la broche 15, qui est reçue dans le logement 413 qui est attaché à la bague. La translation est activée par un ressort de traction ou de compression (non représenté) monté sur la tige 414.a. qui agit sur le manchon 414.b. Des moyens pour stopper le mouvement de translation sont prévus, par exemple il s'agit d'une vis 16 traversant le manchon 414.b. La longueur de la tige 414.a peut être modifiée au cours du traitement ou être fixée définitivement au cours du traitement.

Comme cela est représenté de manière schématique sur la figure 11B, de manière très avantageuse, le manchon 414.b et la tige 414.a ont des sections transversales telles qu'elles empêchent un déplacement en rotation relatif autour de leur axe, ce qui permet de conserver une broche 15 perpendiculaire au plan d'occlusion. Par exemple, le manchon 414.b et la première partie 414.a ont une section transversale rectangulaire. Une vis 416 immobilise les deux parties en translation.

Dans cet exemple le ressort de torsion n'est pas représenté.

Il sera compris que d'autres formes des différentes parties sont envisageables. En outre, le logement peut être porté par la deuxième partie et la broche portée par la bague.

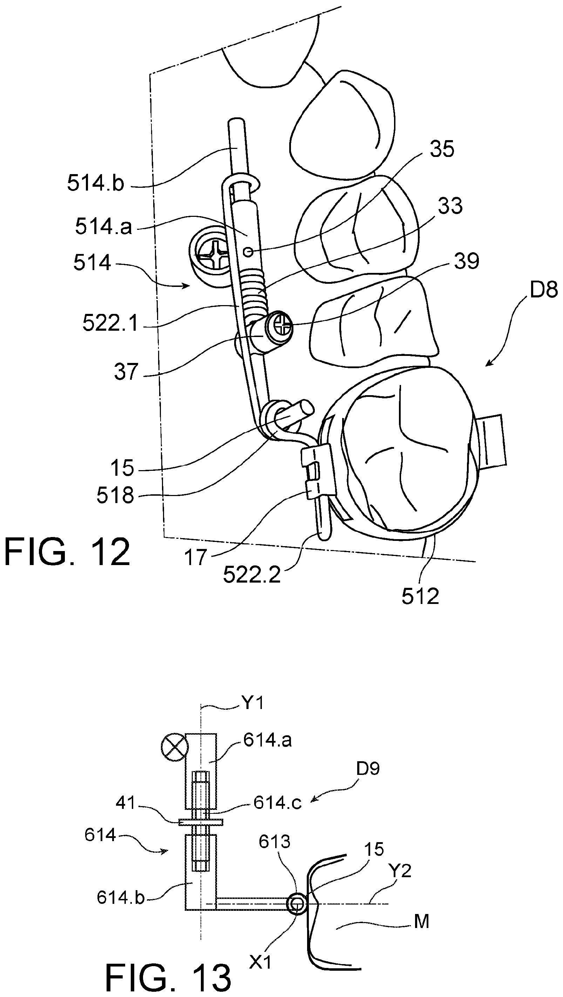

Sur la figure 12, on peut voir un autre exemple de dispositif de déplacement palatin D8 selon le troisième mode de réalisation.

Dans cet exemple, le dispositif D8 comporte une bague 512 munie d'un fourreau 17 sur la face externe de la bague 512 orientée perpendiculairement à l'axe de la bague, également parallèlement au plan d'occlusion, et recevant un brin du ressort de torsion.

Le dispositif D8 comporte un ressort de torsion 518 dont les spires sont montées autour de la broche 15, un brin 522.2 est glissé dans le fourreau 17 de la bague 512 et l'autre brin 522.1, qui sert à activer le ressort, comporte un crochet qui s'accroche sur l'élément fixe 514, bandant le ressort. Les spires du ressort 518 sont montées autour de la broche 15 qui fait partie de la tige 514.

L'élément fixe 514 comporte une première partie 514.a, qui est un manchon destiné à être ancré à un os du palais, et une deuxième partie 514.b formée par une tige portant la broche 15 et coulissant dans la première partie 514.b. Une vis 35 permet d'immobiliser la tige 514.b dans le manchon 514.a.

Un ressort de translation 33 est monté entre la première partie 514.a et la deuxième partie 514.b et peut exercer soit un effort de compression, soit un effort de traction. Le ressort est destiné à exercer un effort en compression ou en traction pour déplacer la dent en translation distale ou mésiale respectivement.

Dans la suite de la description, le ressort destiné à déplacer en translation la dente sera désigné « ressort de translation » qu'il agisse en compression ou en traction.

En outre, le dispositif D8 comporte des moyens pour activer le ressort 33 en compression ou en traction et fixer sa charge. Dans cet exemple, ces moyens comportent un coulisseau 37 monté coulissant sur la tige 514.b entre la molaire M et le manchon 514.a fixe. Le ressort de translation 33 pousse sur le coulisseau 37 qui est fixé sur la tige 514.b et fait coulisser la tige 514.b provoquant un mouvement de translation distale de la broche 15.

Le coulisseau 37 comporte une vis 39 pour l'immobiliser axialement sur la deuxième partie 514.b définissant un niveau de charge du ressort 33.

De préférence, comme pour le dispositif D7, la première partie 514.a et la deuxième partie 514.b sont telles qu'elles sont immobilisées en rotation l'une par rapport à l'autre, par exemple elles ont une section transversale carrée ou rectangulaire.

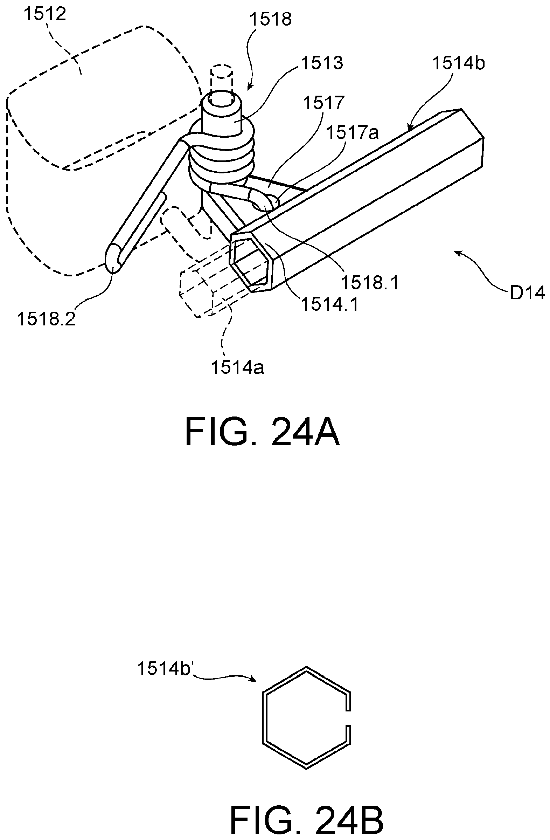

Sur la figure 24A, on peut voir un autre exemple de réalisation de dispositif de déplacement palatin D14 selon le troisième mode de réalisation.

D'une part, dans cet exemple le logement tubulaire 1513 est fixé à la deuxième extrémité 1514.1 d'un manchon 1514b monté coulissant sur une tige 1514a (représentée en pointillés) fixée au palais, et la broche 1515 est fixée sur la face latérale intérieure de la bague 1512 (également représentée en pointillés). Le logement 1513 est relié au manchon 1514b par une embase 1517 qui porte un perçage 1517a destiné à recevoir un brin 1518.1 du ressort de torsion 1518. Les spires du ressort de torsion sont montées autour du logement tubulaire 1513. L'autre brin 1518.2 est destiné à coopérer avec la couronne pour activer le ressort.

En variante et de manière similaire au dispositif D5, l'articulation pivot n'est pas directement sur la face interne de la bague 1512 mais est décalé. Dans cet exemple, la broche formant l'axe de rotation est fixée à l'extrémité de l'élément fixe 14. L'axe de rotation X1 est en avant du fourreau recevant une extrémité du ressort de torsion, et reste proche de la bague et du côté de la cuspide médio-palatine, et donc de l'axe de rotation naturelle de la molaire. Les spires du ressort 19 sont montées autour de la broche, et le dispositif agit sur la molaire via l'extrémité du ressort reçu dans le fourreau. Ce mode de réalisation présente l'avantage de laisser plus de liberté à la cuspide mésio-palatine lorsqu'elle est soumise aux forces masticatoires.

Le manchon 1514b a avantageusement une section intérieure polygonale et la tige 1514a à une section transversale polygonale empêchant la rotation du tube autour de la tige 1514a.

D'autre part, de manière similaire au dispositif D8, le dispositif D14 comporte un ressort de translation (non représenté) et des moyens pour charger le ressort de translation (non représentés). Par exemple le ressort de translation peut être un élastique tendu entre la broche et la dent et exerçant une force mésiale.

Le dispositif D14 présente l'avantage d'être de réalisation simplifiée.

En variante le manchon 1514b' n'est pas complètement fermé sur lui-même comme cela est représenté sur la figure 24B. sa forme est telle qu'elle assure le guidage en translation le long de la tige.

Dans un exemple de réalisation, l'ensemble logement 1513 et manchon 1514b est réalisés par impression 3D.

Le dispositif D14 peut ne pas comporter de ressort de translation pour exercer une compression ou une traction et être uniquement destiné à appliquer une rotation distale de manière similaire au dispositif D5.

Dans un autre exemple, le logement 1513 est réalisé par impression 3D ou par usinage et le manchon est réalisé par usinage ou pliage et est soudé au logement.

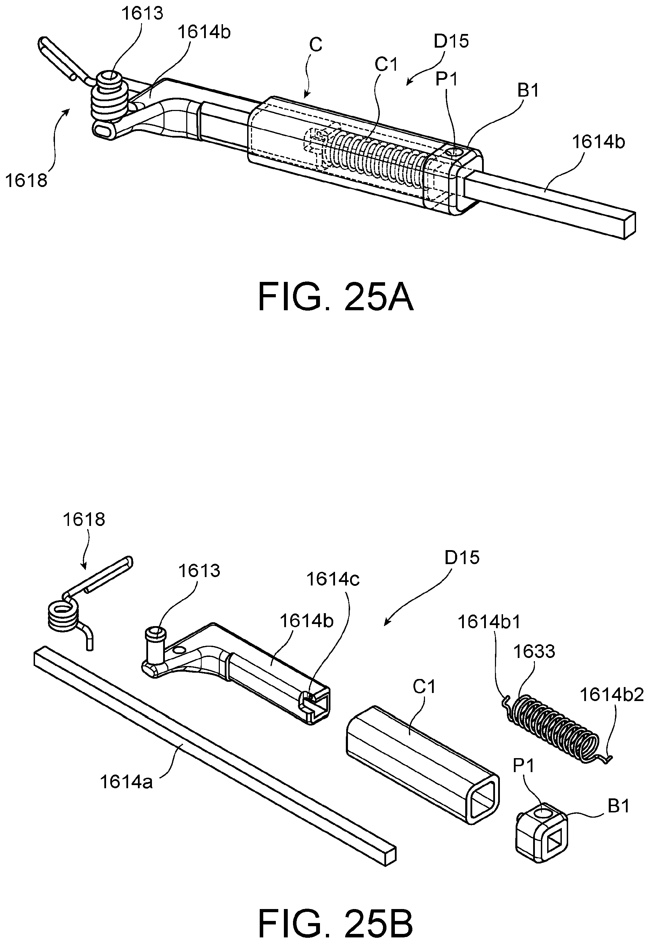

Sur la figure 25A, on peut voir un autre exemple de réalisation d'un dispositif D15 selon le troisième mode de réalisation particulièrement avantageux, puisqu'il peut être utilisé pour appliquer soit à la fois une rotation distale et un distalisation, soit à la fois une rotation mésiale et une mésialisation.

Sur la figure 25B, on peut voir une vue du dispositif dans un état désassemblé.

Le dispositif D15 présente également l'avantage de présenter un carénage qui protège le ressort de translation et rend ainsi la mise en place et l'entretien du dispositif particulièrement aisés.

Le dispositif D15 comporte un manchon 1614b de forme similaire à celle du dispositif D14 et une broche 1615 fixée à l'extrémité du manchon 1614b et formant l'axe de rotation. Le ressort de torsion 1618 est monté autour de la broche 1615. Le dispositif D15 agit sur la molaire par l'intermédiaire du brin 1618.1 du ressort de torsion 1618 qui est reçu dans un fourreau solidaire de la face extérieure de la bague montée sur la molaire.

En variante, la broche 1615 est creuse et forme un logement pour une broche solidaire de la bague de manière similaire au dispositif D14.

Dans cet exemple, le manchon 14614b est de section carrée, ainsi que la tige 1614a. En variante, toute autre forme polygonale est utilisable.

Le dispositif D15 comporte un ressort de translation 1633 et un carénage C qui recouvre le ressort de translation, et une partie du manchon 1614b. Dans cet exemple, le carénage C est en deux parties comprenant un manchon C1 et un bouchon B1 qui sont solidarisés l'une à l'autre par exemple par une soudure.

Le ressort de translation est fixé par une première extrémité au manchon 1614b et par une deuxième extrémité à la tige 1614a. Dans l'exemple représenté, le ressort 1614b comporte à la première extrémité un brin 1614b.1 recourbé reçu dans un perçage 1614c réalisé dans une découpe du manchon 1614b, et à la deuxième extrémité un brin 1614b.2 recourbé reçu dans un perçage réalisé dans le carénage, plus particulièrement dans le bouchon B1. Le carénage est fixé sur la tige par une vis (non représentée). Dans l'exemple des figures 25A et 25B, le bouchon B1 comporte un perçage P1 recevant la vis (non représentée) destinée à immobiliser le carénage par rapport à la tige.

Le réglage de la charge du ressort de translation et de son action en translation ou en traction est obtenu simplement en faisant coulisser le carénage sur la tige 1614a et en le fixant au moyen de la vis.

La mise en place du dispositif D15 dans la bouche du patient va maintenant être décrite.

La tige 1614a a été préalablement fixée au palais. Le dispositif D15, qui a été préalablement assemblé, est monté autour de la tige 1614a qui pénètre dans le ressort de translation 1633 et le manchon 1614b, et la broche 1615 solidaire de la couronne est insérée dans le logement 1613.

Le brin libre du ressort de torsion 1615 est glissé dans le fourreau prévu sur la couronne et similaire au fourreau visible sur la figure 9.

La vis est ensuite insérée dans le perçage P1 du bouchon B1 pour fixer l'action du ressort de translation en traction ou en compression et ajuster sa charge. En effet, lors que le carénage est rapproché du manchon le ressort est mis en compression, lorsque le carénage est éloigné du manchon et étire le ressort de translation qui est fixé au manchon et au carénage, il est mis en traction.

La mise en place et le réglage de ce dispositif sont alors sensiblement simplifiés.

Le ressort de translation 1633 étant entièrement caréné, la manipulation et l'entretien du dispositif sont facilités. En outre, le dispositif présente un visuel amélioré.

Sur la figure 13, on peut voir un exemple de dispositif de déplacement palatin D9 selon le troisième mode de réalisation, dans lequel le dispositif comporte une première partie s'étendant selon un premier axe Y1 et une deuxième partie s'étendant selon un deuxième axe Y2 perpendiculaire à l'axe Y1.

Dans cet exemple, le logement 613 est porté par la bague et le broche 15 est portée par l'élément fixe 614. L'élément fixe 614 est télescopique.

Dans cet exemple, la tige 614 comporte une première partie 614.a ancrée au palais, une deuxième partie 614.b portant la broche et une troisième partie 614.c formée par une tige filetée sur laquelle la première partie et la deuxième partie sont vissées. Une molette 41 est solidaire en rotation de la tige filetée 614.c et est disposée entre la première partie et la deuxième partie. En faisant tourner la molette, la tige filetée 614.c tourne, ce qui provoque un écartement ou un rapprochement de la première partie et de la deuxième partie qui sont fixes en rotation. Le dispositif comporte également un moyen (non représenté) pour empêcher la rotation relative les parties 614.a et 614.b. Ce moyen comporte par exemple deux barres parallèles à l'axe Y1 et disposées de part et d'autre de la tige 614. Les barres sont fixées par une extrémité à la première partie 614.a et par une autre extrémité à la deuxième partie 614.b. Les deux barres ancrées sur les parties 614.a et 614.b immobilisent les parties 614.a et 614.b en rotation l'une par rapport à l'autre.

Le système de réglage peut être remplacé par tout autre dispositif bien connu de l'homme du métier, tel que le dispositif vendu sous la marque Variety SP Maxi^{®} par la société Dentaurum^{®}. D'autre dispositifs de réglage sont également fabriqués par les sociétés Leone et Rocky Mountain^{®}. Ces dispositifs utilisent une clé pour modifier le réglage.

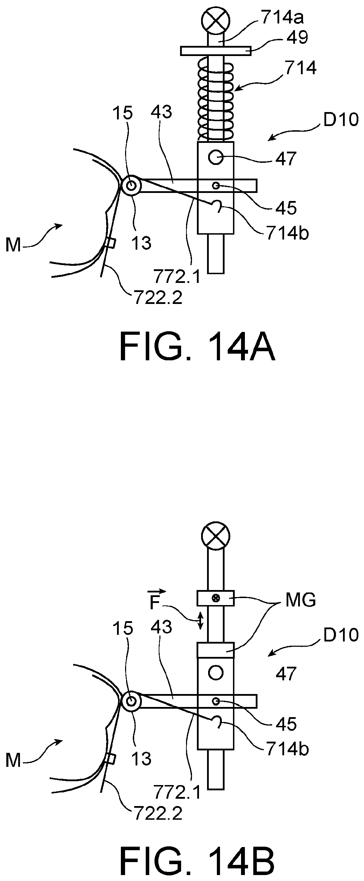

Sur la figure 14A, on peut voir un autre exemple de dispositif de déplacement palatin D10 selon le troisième mode de réalisation comportant un élément fixe 714 télescopique comportant une première partie 714.a formée par une tige destinée à être ancrée à un os du palais, une deuxième partie 714.b formée par un manchon portant rigidement la broche de l'articulation. Dans cet exemple, la broche n'est pas alignée avec l'axe de la tige, une barre 43 est fixée sur le manchon 714.b transversalement à celle-ci, l'extrémité libre de la barre 43 portant la broche 15. Dans cet exemple la barre 43 est fixée à la tige par une vis 45 qui permet un réglage de la barre 43 par rapport au logement qui reçoit la broche et qui sert également à accrocher le brin 722.1 du ressort de torsion 719 pour assurer son activation.

La première partie 714.a comporte une première portion montée coulissante dans le manchon 714.b. De préférence, la première partie 714.a et le manchon 714.b ont des sections rectangulaires ou carrées, ou plus généralement une section empêchant leur rotation relative autour de leurs axes. Une vis 47 traversant le manchon 714.b vient serrer la première portion et assurer leur immobilisation relative.

La portion de la première partie qui ne coulisse pas dans la deuxième partie est de section circulaire et est filetée et sur laquelle est montée une molette 49. Un ressort de compression est monté autour de la portion filetée entre la molette 49 et la deuxième partie. Le déplacement de la molette permet de faire varier l'action et la charge du ressort de translation.

Sur la figure 14B, on peut voir une variante de réalisation du dispositif D10 dans laquelle le ressort de compression est remplacé par deux aimants MG orientés l'un par rapport à l'autre de sorte qu'ils se repoussent.

Il est à noter que le dispositif D8 de la figure 12, le ressort 33 pourrait être remplacé par deux aimants orientés l'un par rapport à l'autre de sorte qu'ils se repoussent ou s'attirent en fonction de l'action que l'on souhaite obtenir ; par exemple un aimant serait porté par la première partie 514a et l'autre serait porté par le coulisseau 37.

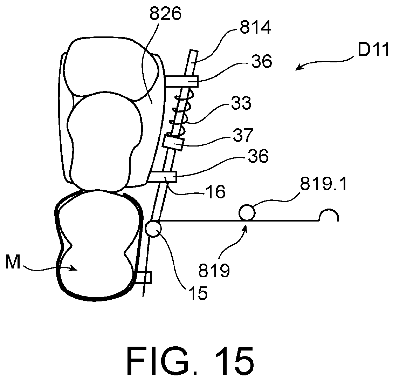

Sur la figure 15, on peut voir un autre exemple de dispositif de déplacement palatin D11 selon le troisième mode de réalisation dans lequel le dispositif est ancré sur les dents voisines.

Dans cet exemple, la platine 826 fixée sur les dents voisines comporte deux supports fixes 36 de type collier alignés de sorte à fixer la direction de la tige 814 et dans lesquelles la tige 814 coulisse. La tige 814 porte la broche 15.

Des moyens sont prévus pour assurer une immobilisation axiale de la tige 814, par exemple une vis 16 traversant un collier ou les deux colliers.

Le dispositif comporte un ressort de translation 33 monté sur la tige 814.

En outre, le dispositif D11 comporte des moyens pour charger le ressort de translation 33. Dans cet exemple, la tige 814 comporte un coulisseau 37 monté coulissant entre les deux colliers. Le ressort de translation 33 pousse sur le coulisseau 37, qui est fixé sur la tige 814 et fera coulisser la tige 814, provoquant un mouvement de translation distale ou mésiale de la broche 15 qui est reçu dans le support

Dans la représentation de la figure 15, le ressort de torsion 819 est désactivé. En outre dans cet exemple, le ressort de torsion 819 comporte une boucle 819.1 sur l'un de ses brins. La mise en œuvre d'un tel ressort dans les dispositifs orthodontiques selon l'invention améliore encore davantage leur efficacité i.e. réduire l'effet parasitaire sur les dents voisines. Ce ressort peut être mis en œuvre dans tous les dispositifs comportant un ressort de torsion.

De préférence, au moins une des deux parties a une section rectangulaire ou carrée pour éviter une rotation relative des deux parties autour de leur axe.

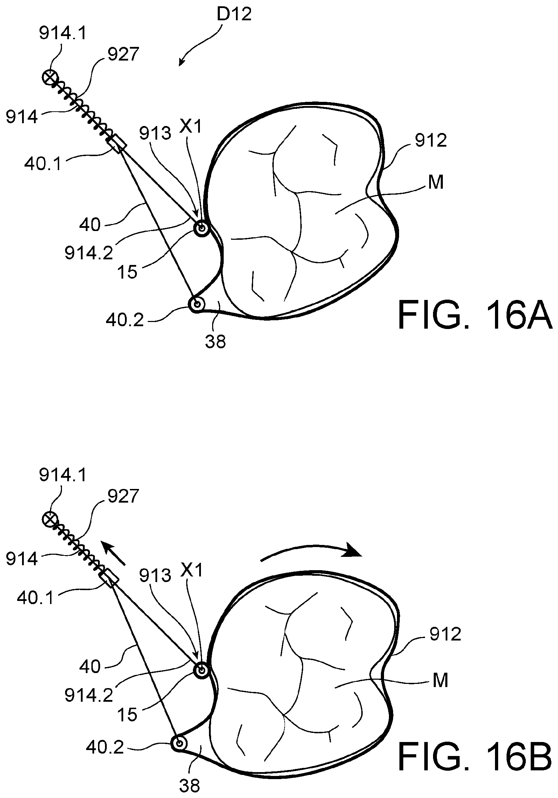

Sur les figures 16A et 16B, on peut voir un dispositif de déplacement palatin D12 selon le deuxième mode de réalisation dans lequel l'effort de rotation est obtenu par un mouvement de translation.

Dans cet exemple, la bague 912 comporte un logement 913 recevant la broche 15 fixant l'axe de rotation. Elle comporte également un élément 38 pour la fixation d'une tige 40 destinée à exercer un effort de traction.

Le dispositif comporte un élément fixe 914 formé par une tige destinée à être ancré sur le palais par une première extrémité 914.1 et portant la broche 15 à la deuxième extrémité 914.2.

Le dispositif comporte également une tige 40 comprenant une première extrémité 40.1 montée coulissante sur la tige fixe et une deuxième extrémité 40.2 articulée sur l'élément 38. Par exemple la première extrémité 40.1 de la tige 40 comporte un coulisseau coulissant autour de la tige 914. Le dispositif comporte également un ressort de traction 927 monté sur la tige fixe 914 et fixé au coulisseau de la tige articulée 40 et exerçant un effort de traction sur la première extrémité 40.1 de la tige articulée 40.

Les figures 16A et 16B illustrent l'action du dispositif sur la molaire. La tige articulée 40 exerce une traction sur la molaire au niveau de l'élément 38, qui pivote autour de l'axe de rotation fixe X1 dans le sens distal.

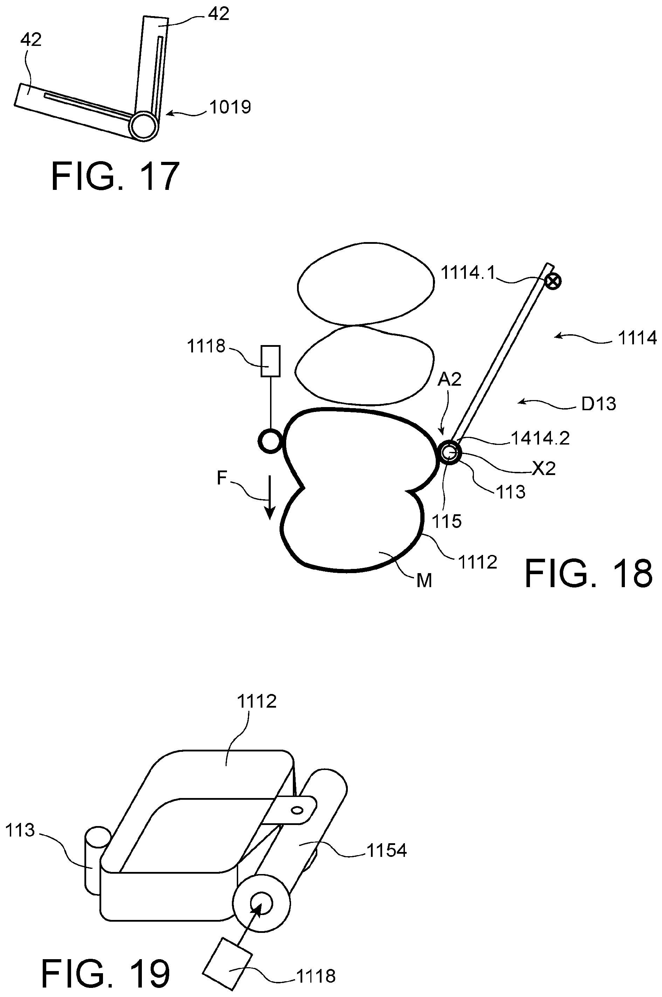

Sur la figure 17, on peut voir un autre exemple d'un ressort de torsion 1019 auquel sont associés des capots 42 couvrant les brins du ressort sur un côté. L'autre côté du ressort est laissé libre pour permettre l'insertion de la broche dans les spires et l'accrochage des brins du ressort sur la bague et sur la tige. De préférence, le ressort est fourni avec les capots et est monté dans le dispositif.

Des dispositifs de déplacement vestibulaire vont maintenant être décrits.

Le dispositif de déplacement vestibulaire est configuré pour appliquer à la molaire une force distalisante qui s'applique du côté vestibulaire qui provoque une rotation distale, et à centrer la cuspide mésio-palatine dans la fosse centrale de l'antagoniste.

Sur la figure 18, on peut voir une représentation schématique d'un dispositif de déplacement vestibulaire D13.

Le dispositif D13 comporte une bague 1112 solidarisée à la première molaire, par exemple collée sur la molaire M de sorte que la molaire M et la bague 1112 soient solidaires en mouvement. Un logement tubulaire 113 d'axe perpendiculaire au plan d'occlusion est fixé sur la face latérale intérieure ou palatine de la bague 1112. Le tube tubulaire 113 est positionné sur la bague 1112, de sorte qu'une fois en place sur la molaire, il soit proche de la cuspide mésio-palatine.

Le dispositif comporte également un élément 1114 destiné à être fixe dans la bouche du patient, désigné « élément fixe » formé par une tige dont une première extrémité 1114.1 est destinée à être ancrée dans un os du palais ; il s'agit d'un ancrage osseux. Pour cela, la première extrémité 1114.1 comporte une boucle recevant une vis vissée dans le palais. La deuxième extrémité 1114.2 de la tige 1114 forme une broche 115 configurée pour se loger dans le logement tubulaire 113. La tige 1114 est destinée à être immobile par rapport au palais.

La broche 115 et le logement tubulaire 113 forment une articulation A2 d'axe de rotation X2 fixe. Cet axe de rotation X2 est sensiblement parallèle à l'axe de rotation naturel de la molaire qui passe par la racine palatine et la cuspide mésio-palatine logée dans la fosse antagoniste. L'axe X2 de l'articulation A2 est située au plus près de l'axe de rotation naturel de la molaire.

Le dispositif D13 comporte également des moyens 1118 configurés pour exercer un effort F sur la molaire du côté vestibulaire de sorte qu'elle ait un mouvement de rotation distale.

Dans cet exemple, la bague peut être similaire à la bague décrite dans le document EP0689403B1 et dans le document De Baets, J.: Interception of the Pseudo-Class I using the rotational headgear tube, J. Clin. Orthod. 29: 244 -256, 1995 et représenté sur la figure 19.

La bague comporte sur sa face vestibulaire une pièce 1154 monté mobile en rotation par rapport à la bague 1112 autour d'un axe perpendiculaire au plan d'occlusion. Les moyens 1118 pour exercer la force distale sont fixés à la pièce 1154, de sorte à appliquer une force distale à la molaire sur laquelle la bague sera montée. Cette force distale est transmise à la molaire qui pivote vers l'arrière. La pièce 1154 et/ou la bague 1112 sont conformées pour que la force exercer par les moyens 1118 conservent sensiblement la même au cours du déplacement en rotation de la dent.

Les moyens 1118 peuvent être des moyens extra-oraux. La traction est exercée par des élastiques qui sont attachés au crâne ou à la nuque du patient.

Les moyens 1118 peuvent être intra-oraux. Ils peuvent comporter des ressorts ou élastiques qui sont fixés par une extrémité à un ancrage osseux interdentaire ou un ancrage dans l'os zygomatique et une autre extrémité fixée à la pièce mobile 1154.

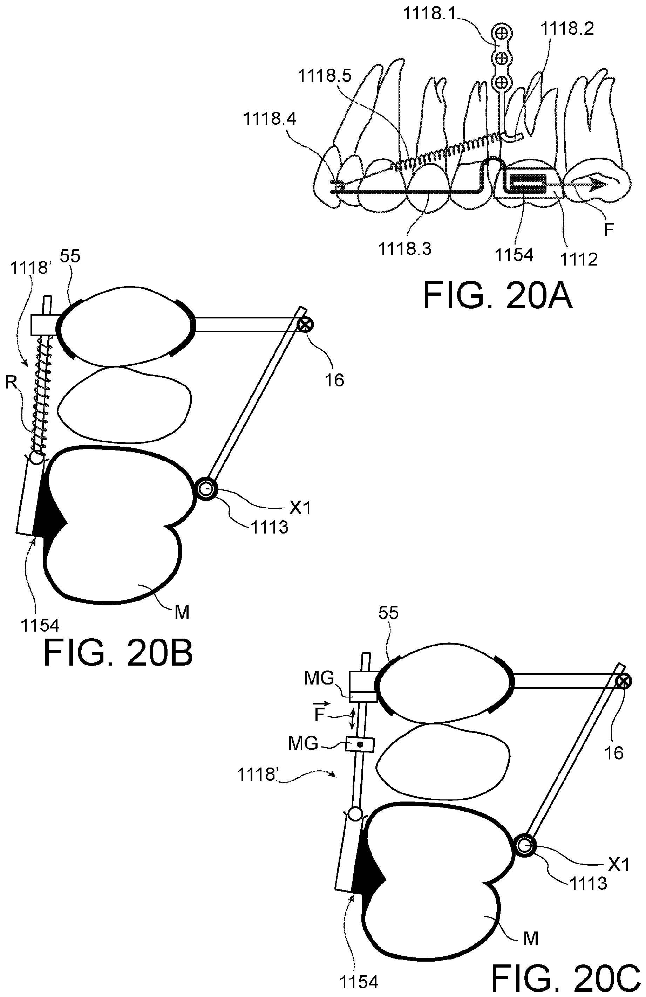

Sur la figure 20A, on peut voir une représentation schématique des moyens 1118 intra-oraux avec ancrage zygomatique. Les moyens comportent une plaque 1118.1 fixée à l'os zygomatique muni d'un crochet 1118.2, et une tige 1118.3 montée par une extrémité dans la pièce mobile 1154et munie à une autre extrémité d'un crochet 1118.4. Les moyens 1118 comportent également un ressort 1118.5 monté en traction entre le crochet 1118.2 et le crochet 1118.3. L'effort de traction exercé par le ressort 1118.5 est converti en effort de poussée distal.

Sur la figure 20B, on peut voir une variante de réalisation dans laquelle les moyens 1118' appliquent directement une force de poussée. Par exemple les moyens 1118' comportent une barre et un ressort de compression R ou un piston. La barre est montée coulissante par rapport à une platine 55 qui collée sur une ou des prémolaires ou une molaire de lait ou une vis fixée montée entre les prémolaires par exemple, et est apte à être fixée à la platine. La barre comporte une extrémité sphérique, qui pénètre dans un tube solidaire de la bague et dont l'axe est orienté vers l'extérieur et est parallèle au plan occlusal de façon que, au fur et à mesure que la sphère pénètre dans le tube, la molaire est forcée de tourner. Une liaison linéaire annulaire est prévue entre la tige et la bague. Le dispositif comporte également une barre entre l'ancrage 16 et la platine 55 fixée à la prémolaire immobilisant la prémolaire et évitant l'effet parasitaire de la force en réaction du ressort.

Selon une variante représentée sur la figure 20C, la force de poussée est délivrée par deux aimants MG se repoussant à la place du ressort de compression. Par exemple un aimant est fixé sur la platine 55 et l'autre est monté sur la tige. Le dispositif comporte également une barre entre l'ancrage 16 et la platine 55 fixée à la prémolaire immobilisant la prémolaire et évitant l'effet parasitaire de la force en réaction de l'aimant fixé à la platine.

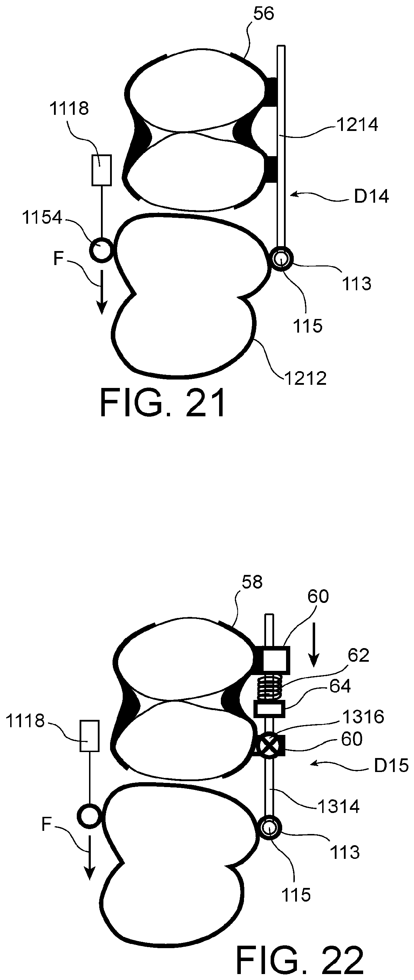

Sur la figure 21, on peut voir un dispositif de déplacement vestibulaire D14 selon un autre exemple de réalisation dans lequel l'élément fixe 1214 est destiné à être fixé à une ou aux prémolaires ou à une molaire de lait. Par exemple une bague ou une platine 56 est collée sur la ou les prémolaires, l'élément fixe comporte une tige munie d'une broche 115 reçue dans un logement 113 de la bague 1212 solidarisée à la molaire.

Les moyens d'application de la force distale 1118 sont similaires à ceux décrits en relation avec le dispositif D13.

Sur la figure 22, on peut voir un autre exemple d'un dispositif de déplacement vestibulaire D15 capable, en plus d'appliquer une rotation distale à la molaire, de lui appliquer une translation distale ou mésiale permettant de replacer la cuspide mésio-palatine dans sa fosse antagoniste.

Dans cet exemple, le dispositif est ancré sur les dents voisines.

Dans cet exemple, la platine 58 fixée sur les dents voisines comporte deux supports fixes 60 de type collier alignés de sorte à fixer la direction de la tige 1314 et dans lesquelles la tige 1314 coulisse. La tige 1314 porte la broche 115.

Des moyens sont prévus pour assurer une immobilisation axiale de la tige 1314, par exemple une vis 1316 traversant un collier ou les deux colliers

Un ressort de translation 62 est monté autour de la tige 1314 entre un collier et un coulisseau 64 monté coulissant entre les deux colliers. Le ressort de translation 62 pousse sur le coulisseau 64 qui est fixé sur la tige 1314 et fera coulisser la tige 1314 provoquant un mouvement de translation distale de la broche 115, qui est reçue dans le logement 113. Quand un mouvement de mésialisation est désiré, le ressort sera attaché au coulisseau 64 et le support 60. En étirant le ressort, le coulisseau 64 qui est fixé sur la tige 1314 et fera coulisser la tige 1314 provoquant un mouvement de translation mésiale de la broche 15, qui est reçue dans le logement 113.

De préférence, au moins une des deux parties a une section rectangulaire ou carrée pour éviter une rotation relative des deux parties autour de leur axe.

Les moyens d'application de la force distale 1118 sont similaires à ceux décrits en relation avec le dispositif D18.

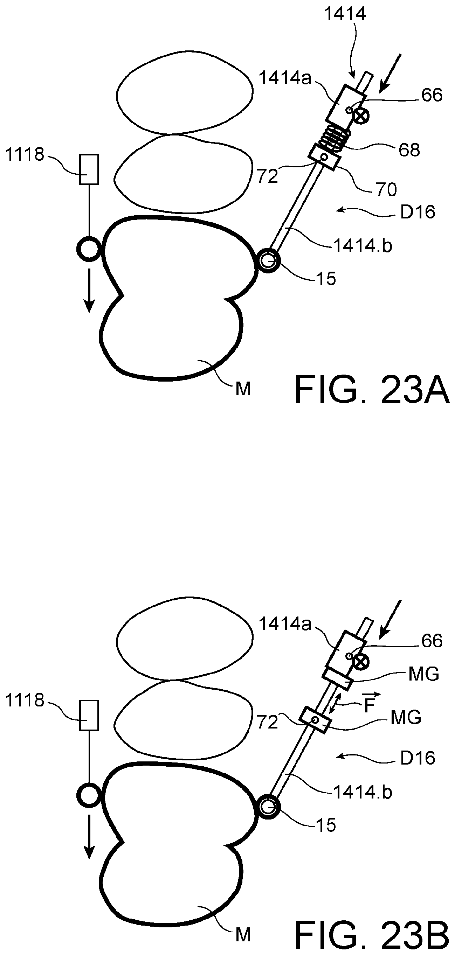

Sur la figure 23A, on peut voir un autre exemple de dispositif de déplacement vestibulaire D16, capable également d'appliquer une rotation distale à la molaire de lui appliquer une translation distale ou mésiale permettant de replacer la cuspide mésio-palatine dans sa fosse antagoniste.

Le dispositif D16 comporte un élément fixe 1414 comprenant une première partie 1414.a qui est un manchon destiné à être ancré à un os du palais et une deuxième partie 1414.b formée par un tige portant la broche 15 et coulissant dans la première partie 1414.a (manchon). Une vis 66 permet d'immobiliser la tige 1414.b dans le manchon 1414.a.

Un ressort 68 est monté en compression entre la première partie 1414.a et la deuxième partie 1414.b.

En outre, le dispositif D16 comporte des moyens pour charger le ressort de translation 68. Dans cet exemple, ces moyens comportent un coulisseau 70 monté coulissant sur la tige 1414.b entre la molaire M et le manchon 1414.a fixe. Le ressort de translation 68 pousse sur le coulisseau 70 qui est fixé sur la tige 1414.b et fera coulisser la tige 1414.b provoquant un mouvement de translation distale de la broche 115.

Le coulisseau 70 comporte une vis 72 pour l'immobiliser axialement sur la deuxième partie 1414.b définissant un niveau de charge du ressort 68.

De préférence, la première partie 1414.a et la deuxième partie 1414.b sont telles qu'elles sont immobilisées en rotation l'une par rapport à l'autre, par exemple elles ont une section transversale carrée ou rectangulaire.

Les moyens d'application de la force distale sont similaires à ceux décrits en relation avec le dispositif D13.

Sur la figure 23B, on peut voire une variante du dispositif de la figure 23A, dans laquelle le ressort est remplacé par deux aimants MG se repoussant ou s'attirant.

En variante, la broche ou le logement peut être supporté par une platine qui est solidarisée à la dent par une résine. La platine est avantageusement réalisée par fabrication additive également désignée impression 3D.

Les dispositifs de déplacement palatin et vestibulaire selon l'invention peuvent être réalisés par assemblage de pièce par soudage, vissage, collage, les pièces étant réalisées par découpe et usinage. En variante, les dispositifs sont réalisés au moins en partie par fabrication additive.

Il sera compris que dans tous les exemples de réalisation, la broche peut être portée par la tige ou par la bague et le logement peut être porté par la bague ou par la tige respectivement. En outre, tous les exemples de réalisation comportent une tige qui peut être ancrée soit à un os du palais, soit à une ou des dents voisines, de préférence les prémolaires ou la prémolaire et une molaire de lait.

Dans les exemples décrits, les dispositifs de déplacement comportent deux parties, l'une munie d'une broche et l'autre d'un logement, les deux parties étant assemblées lorsque la broche est montée dans le logement lors de la mise en place du dispositif sur la molaire du patient, cette réalisation facilite le montage. En effet d'une part, la tige est ancrée au palais ou à une dent voisine, et d'autre part la bague ou tout autre support est fixé sur la molaire. En variante, le dispositif est fourni à l'orthodontiste déjà assemblé avant sa mise en place.

Il sera compris que tout moyen apte à exercer un couple de rotation ou un effort de translation ne sort pas du cadre de la présente invention.

## Revendications

1. Dispositif de déplacement d'une molaire supérieure (M) comprenant une cuspide mésio-palatine, comportant :
- un support (12) destiné à être fixé à la molaire supérieure (M),
- une tige (14) comportant une première extrémité (14.1) destinée à être ancrée à un os du palais ou sur au moins une dent voisine de la molaire supérieure de sorte que, lorsque le dispositif est en place, la tige a une position donnée par rapport à la molaire supérieure (M),
- une articulation en rotation (A1) entre le support (12) et la tige (14), ladite articulation en rotation (A1) comportant un axe de rotation (X1) destiné à être fixe par rapport à ladite tige (14) et à être perpendiculaire au plan d'occlusion, ledit axe de rotation (X1) étant destiné à être disposé proche de la cuspide mésio-palatine de la molaire supérieure (M),
- et des moyens configurés pour appliquer un effort apte à appliquer une rotation à ladite molaire supérieure (M) autour de l'axe de rotation (X1), de sorte que ladite molaire supérieure (M) ait une rotation distale, ledit effort étant appliqué soit sur la face palatine de la molaire soit sur une face vestibulaire de la molaire.

2. Dispositif de déplacement selon la revendication 1, dans lequel la tige (14) comporte une broche (15) destinée à former l'axe de rotation (X1) et le support (12) comporte un logement (13) pour ladite broche (15) ou le support comporte une broche destinée à former l'axe de rotation et la tige porte un logement pour ladite broche, l'ensemble broche et logement formant l'articulation en rotation.

3. Dispositif de déplacement selon la revendication 2, dans lequel des moyens configurés pour appliquer un effort sur la face palatine de la molaire apte à appliquer une rotation à ladite molaire supérieure (M) comportent au moins un ressort de torsion (19) comportant des spires et deux brins s'étendant radialement, lesdites spires (20) étant montées sur la broche, un brin(22.2) étant fixé au support et l'autre brin (2212) étant fixé à la tige (14), la fixation de l'autre brin (22.1) sur la tige (14) provoquant la mise sous charge du ressort.

4. Dispositif de déplacement selon la revendication 3, dans lequel le logement comporte une ouverture latérale sur sa hauteur, permettant une mise en place des spires par un déplacement transversal du ressort, ledit logement comportant une fente transversale pour le passage du brin fixé au support.

5. Dispositif de déplacement selon la revendication 2, dans lequel les moyens configurés pour appliquer un effort sur la face palatine de la molaire apte à appliquer une rotation à ladite molaire supérieure (M) comportent un ressort de traction destiné à être fixé par une première extrémité destinée à un os du palais ou à un ou des dents voisines, et est fixé au support à un emplacement distinct de celui de l'articulation pivot.

6. Dispositif de déplacement selon la revendication 2, dans lequel les moyens configurés pour appliquer un effort sur la face palatine de la molaire apte à appliquer une rotation à ladite molaire supérieure (M) comportent un ressort de traction monté autour de la tige, fixé par une première extrémité à la tige du côté de sa première extrémité, le dispositif comportant également une barre, dont une extrémité coulisse le long de tige et une extrémité est fixée au support à un emplacement distinct de celui de l'articulation pivot, la deuxième extrémité du ressort étant fixée à l'extrémité de la barre coulissant sur la tige.

7. Dispositif de déplacement selon la revendication 1, dans lequel la tige comporte une broche destinée à former l'axe de rotation et disposé proche de la cuspide mésio-palatine de la molaire supérieure et dans lequel des moyens configurés pour appliquer un effort sur la face palatine de la molaire apte à appliquer une rotation à ladite molaire supérieure (M) comportent au moins un ressort de torsion (19) comportant des spires et deux brins , lesdites spires (20) étant montées sur la broche, ledit dispositif étant configuré pour être relié au support par l'intermédiaire d'un brin du ressort de torsion.

8. Dispositif de déplacement selon la revendication 1 ou 2, dans lequel dans lequel les moyens configurés pour appliquer un effort sur la face vestibulaire de la molaire apte à appliquer une rotation à ladite molaire supérieure (M) comportent une pièce articulée en rotation sur le support, ladite pièce étant située sur la face vestibulaire de la molaire, et des moyens élastiques ou des aimants répulsifs exerçant un effort sur ladite pièce articulée.

9. Dispositif de déplacement selon la revendication 8, dans lequel les moyens configurés pour appliquer un effort sur la face vestibulaire de la molaire sont configurés pour être ancrés entre deux dents ou à l'os zygomatique ou sont extraoraux et sont fixés sur le crâne ou la nuque du patient.

10. Dispositif de déplacement selon l'une des revendications 1 à 7, comportant des moyens configurés pour appliquer un effort apte à déplacer en translation ladite molaire supérieure,

11. Dispositif de déplacement selon la revendication 10, dans lequel les moyens configurés pour appliquer un effort apte à déplacer en translation ladite molaire supérieure comportent un ressort de translation ou des aimants orientés l'un par rapport à l'autre de sorte à se repousser ou s'attirer en fonction de l'action souhaitée.

12. Dispositif de déplacement selon la revendication 11, dans lequel la tige comporte une première partie et une deuxième partie configurées pour coulisser l'une par rapport à l'autre, et dans lequel le ressort de translation est monté sur la tige entre la première partie et la deuxième partie, ou les aimants sont montés sur la première partie et la deuxième partie, la première partie et la deuxième partie ayant avantageusement des sections transversales telles qu'elles empêchent une rotation relative autour de leur axe.

13. Dispositif de déplacement selon la revendication 12, dans lequel le ressort étant fixé par une extrémité à la première partie et par une autre extrémité à la deuxième partie, la position relative de la première partie et de la deuxième partie permettant de mettre le ressort de translation en compression ou en traction.

14. Dispositif de déplacement selon l'une des revendication 11 à 13, comportant un carénage recouvrant au moins le ressort de translation et formant la première ou la deuxième partie.

15. Dispositif de déplacement selon l'une des revendications 1 à 14, dans lequel le support est une bague destinée à être montée autour de la première molaire supérieure et/ ou dans lequel le dispositif de déplacement comporte une platine fixée sur une ou des dents voisines de la première molaire supérieure, à laquelle la première extrémité de la tige est fixée.

## Patentansprüche

1. Vorrichtung zum Bewegen eines oberen Molaren (M), umfassend einen mesiopalatinalen Höcker, umfassend:
- eine Halterung (12), die dazu bestimmt ist, den am oberen Molaren (M) befestigt zu werden,
- einen Schaft (14), umfassend ein erstes Ende (14.1), das dazu bestimmt ist, an einem Knochen des Gaumens oder an mindestens einem Zahn in der Nähe des oberen Molaren verankert zu werden, sodass der Schaft, wenn die Vorrichtung an ihrem Platz ist, eine gegebene Position in Bezug auf den oberen Molaren (M) aufweist,
- ein Drehgelenk (A1) zwischen der Halterung (12) und dem Schaft (14), wobei das Drehgelenk (A1) eine Drehachse (X1) umfasst, die dazu bestimmt ist, in Bezug auf den Schaft (14) feststehend zu sein und senkrecht zu der Okklusionsebene zu stehen, wobei die Drehachse (X1) dazu bestimmt ist, nahe dem mesiopalatinalen Höcker des oberen Molaren (M) angeordnet zu werden,
- und Einrichtungen, die konfiguriert sind, um eine Kraft auszuüben, die geeignet ist, um eine Drehung auf den oberen Molar (M) um die Drehachse (X1) auszuüben, sodass der obere Molar (M) eine distale Drehung aufweist, wobei die Kraft entweder auf die palatinale Seite des Molars oder auf eine vestibuläre Seite des Molars ausgeübt wird.

2. Bewegungsvorrichtung nach Anspruch 1, wobei der Schaft (14) eine Spindel (15) aufweist, der dazu bestimmt ist, die Drehachse (X1) zu bilden, und die Halterung (12) eine Aufnahme (13) für die Spindel (15) umfasst, oder die Halterung eine Spindel umfasst, die dazu bestimmt ist, die Drehachse zu bilden, und der Schaft eine Aufnahme für die Spindelt trägt, wobei die Spindel und die Aufnahme zusammen das Drehgelenk bilden.

3. Bewegungsvorrichtung nach Anspruch 2, wobei Einrichtungen, die konfiguriert sind, um eine Kraft auf die palatinale Seite des Molars ausüben, die geeignet ist, eine Drehung auf den oberen Molar (M) auszuüben, umfassend mindestens eine Torsionsfeder (19) umfassend Windungen und zwei sich radial erstreckenden Stränge, wobei die Windungen (20) an der Spindel montiert sind, wobei ein Strang (22.2) an der Halterung und der andere Strang (2212) an dem Schaft (14) befestigt ist, wobei die Befestigung des anderen Strangs (22.1) an der Spindel (14) die Belastung der Feder bewirkt.

4. Bewegungsvorrichtung nach Anspruch 3, wobei die Aufnahme über ihre Höhe eine seitliche Öffnung umfasst, die ein Anbringen der Windungen durch eine Querverschiebung der Feder ermöglicht, wobei die Aufnahme einen Querschlitz für den Durchgang des an der Halterung befestigten Strangs aufweist.

5. Bewegungsvorrichtung nach Anspruch 2, wobei die Einrichtungen, die konfiguriert sind, um eine Kraft auf die palatinale Seite des Molars ausüben, die geeignet ist, eine Drehung auf den oberen Molar (M) auszuüben, eine Zugfeder umfassen, die dazu bestimmt ist, mit einem ersten Ende, das für einen Knochen des Gaumens oder einen oder mehrere benachbarte Zähne bestimmt ist, befestigt zu werden, und an der Halterung an einer Stelle befestigt ist, die von der des Drehgelenks verschieden ist.

6. Bewegungsvorrichtung nach Anspruch 2, wobei die Einrichtungen, die konfiguriert sind, um eine Kraft auf die palatinale Seite des Molars ausüben, die geeignet ist, eine Drehung auf den oberen Molar (M) auszuüben, eine Zugfeder umfassen, die um den Schaft herum montiert ist und mit einem ersten Ende an dem Schaft auf der Seite seines ersten Endes befestigt ist, wobei die Vorrichtung auch eine Stange umfasst, von der ein Ende entlang des Schafts gleitet und ein Ende an der Halterung an einer Stelle befestigt ist, die sich von jener des Drehgelenks unterscheidet, wobei das zweite Ende der Feder an dem Ende der Stange befestigt ist, das auf dem Schaft gleitet.

7. Bewegungsvorrichtung nach Anspruch 1, wobei der Schaft eine Spindel umfasst, die dazu bestimmt ist, die Drehachse zu bilden, und die in der Nähe des mesiopalatinalen Höckers des oberen Molars angeordnet ist, und bei der Einrichtungen, die konfiguriert sind, um eine Kraft auf die palatinale Seite des Molars auszuüben, die geeignet ist, eine Drehung auf den oberen Molar (M) auszuüben, mindestens eine Torsionsfeder (19) umfassen, umfassend Windungen und zwei Stränge, wobei die Windungen (20) an der Spindel montiert sind, wobei die Vorrichtung konfiguriert ist, um über einen Strang der Torsionsfeder mit der Halterung verbunden zu sein.

8. Bewegungsvorrichtung nach Anspruch 1 oder 2, wobei bei dieser die Einrichtungen, die konfiguriert sind, um eine Kraft auf die vestibuläre Seite des Molars auszuüben, die geeignet ist, eine Drehung auf den oberen Molar (M) auszuüben, ein Teil, das drehbar an der Halterung angelenkt ist, wobei sich das Teil auf der vestibulären Seite des Molars befindet, und elastische Einrichtungen oder abstoßende Magnete, die eine Kraft auf das angelenkte Teil ausüben, umfassen.

9. Bewegungsvorrichtung nach Anspruch 8, wobei die Einrichtungen, die konfiguriert sind, um eine Kraft auf die vestibuläre Seite des Molars auszuüben, konfiguriert sind, um zwischen zwei Zähnen oder an dem Jochbein verankert zu werden, oder extraoral sind und an dem Schädel oder Nacken des Patienten befestigt werden.

10. Bewegungsvorrichtung nach einem der Ansprüche 1 bis 7, umfassend Einrichtungen, die konfiguriert sind, um eine Kraft ausüben, die geeignet ist, den oberen Molar translatorisch zu bewegen.

11. Bewegungsvorrichtung nach Anspruch 10, wobei die Einrichtungen, die konfiguriert sind, um eine Kraft auszuüben, die geeignet ist, den oberen Molar translatorisch zu bewegen, eine Translationsfeder oder Magnete umfassen, die zueinander ausgerichtet sind, sodass sie sich je nach gewünschter Wirkung abstoßen oder anziehen.

12. Bewegungsvorrichtung nach Anspruch 11, wobei der Schaft einen ersten Abschnitt und einen zweiten Abschnitt aufweist, die konfiguriert sind, um in Bezug aufeinander zu gleiten, und wobei die Translationsfeder an dem Schaft zwischen dem ersten Abschnitt und dem zweiten Abschnitt montiert ist, oder die Magnete an dem ersten Abschnitt und dem zweiten Abschnitt montiert sind, wobei der erste Abschnitt und der zweite Abschnitt vorteilhafterweise derartige Querschnitte aufweisen, dass sie eine relative Drehung um ihre Achse verhindern.

13. Bewegungsvorrichtung nach Anspruch 12, wobei die Feder mit einem Ende an dem ersten Abschnitt und mit einem anderen Ende an dem zweiten Abschnitt befestigt ist, wobei die relative Position des ersten Abschnitts und des zweiten Abschnitts es ermöglicht, die Translationsfeder auf Druck oder Zug zu stellen.

14. Bewegungsvorrichtung nach einem der Ansprüche 11 bis 13, umfassend eine Verkleidung, die mindestens die Translationsfeder abdeckt und den ersten oder zweiten Abschnitt bildet.

15. Bewegungsvorrichtung nach einem der Ansprüche 1 bis 14, wobei die Halterung ein Ring ist, der dazu bestimmt ist, um den ersten oberen Molaren herum montiert zu werden, und/oder wobei die Bewegungsvorrichtung eine Platine umfasst, die an einem oder mehreren benachbarten Zähnen des ersten oberen Molaren befestigt ist, an der das erste Ende des Schafts befestigt ist.

## Claims

1. A device for displacement of an upper molar (M) comprising a mesiopalatal cusp, comprising:
- a support (12) intended to be fixed to the upper molar (M),
- a rod (14) comprising a first end (14.1) intended to be anchored to a palate bone or to at least one tooth adjacent to the upper molar so that, when the device is in place, the rod has a given position relative to the upper molar (M),
- a rotational hinge (A1) between the support (12) and the rod (14), said rotational hinge (A1) comprising an axis of rotation (X1) intended to be fixed relative to said rod (14) and to be perpendicular to the occlusal plane, said axis of rotation (X1) being intended to be arranged close to the mesiopalatal cusp of the upper molar (M),
- and means configured to apply a force able to rotate said upper molar (M) about the axis of rotation (X1), so that said upper molar (M) has a distal rotation, said force being applied either to the palatal face of the molar or to a vestibular face of the molar.

2. The displacement device according to claim 1, wherein the rod (14) comprises a pin (15) intended to form the axis of rotation (X1) and the support (12) comprises a housing (13) for said pin (15) or the support comprises a pin intended to form the axis of rotation and the rod carries a housing for said pin, the pin and the housing assembly forming the rotational hinge.

3. The displacement device according to claim 2, wherein the means configured to apply a force to the palatal face of the molar able to apply a rotation to said upper molar (M) comprising at least one torsion spring (19) comprising coils and two radially extending strands, said coils (20) being mounted on the pin, one strand (22. 2) being fixed to the support and the other strand (22.1) being fixed to the rod (14), the attachment of the other strand (22.1) to the rod (14) causing the spring to be loaded.

4. The displacement device according to claim 3, wherein the housing comprises a lateral opening over its height, allowing the coils to be positioned by transverse displacement of the spring, said housing comprising a transverse slot for the passage of the strand attached to the support.

5. The displacement device according to claim 2, wherein the means configured to apply a force to the palatal face of the molar able to apply a rotation to said upper molar (M) comprises a tension spring intended to be fixed by a first end intended for a palate bone or to a neighboring tooth or teeth, and is fixed to the support at a location distinct from that of the pivot hinge.

6. The displacement device according to claim 2, wherein the means configured to apply a force to the palatal face of the molar able to rotate said upper molar (M) comprises a tension spring mounted about the rod, fixed by a first end to the rod on the side of its first end, the device also comprising a bar, one end of which slides along the rod and one end of which is fixed to the support at a location distinct from that of the pivot hinge, the second end of the spring being fixed to the end of the bar sliding on the rod.

7. The displacement device according to claim 1, wherein the rod comprises a pin intended to form the axis of rotation and arranged close to the mesiopalatal cusp of the upper molar and wherein the means are configured to apply a force to the palatal face of the molar able to rotate said upper molar (M) comprises at least one torsion spring (19) comprising coils and two strands, said coils (20) being mounted on the pin, said device being configured to be connected to the support by means of one strand of the torsion spring.

8. The displacement device according to claim 1 or 2, wherein the means configured to apply a force on the vestibular face of the molar able to rotate said upper molar (M) comprises a part articulated in rotation on the support, said part being located on the vestibular face of the molar, and elastic means or repulsive magnets exerting a force on said articulated part.

9. The displacement device according to claim 8, wherein the means configured to apply a force on the vestibular face of the molar are configured to be anchored between two teeth or to the zygomatic bone or are extra-oral and are fixed to the skull or nape of the patient.

10. The displacement device according to one of claims 1 to 7, comprising means configured to apply a force able to displace in translation said upper molar.

11. The displacement device according to claim 10, wherein the means configured to apply a force able to displace in translation said upper molar comprises a translation spring or magnets oriented relative to one another so as to repel or attract one another depending on the desired action.

12. The displacement device as claimed in claim 11, wherein the rod comprises a first part and a second part configured to slide relative to one another, and wherein the translation spring is mounted on the rod between the first part and the second part, or the magnets are mounted on the first part and the second part, the first part and the second part having crosssections such that they prevent relative rotation about their axis.

13. The displacement device according to claim 12, wherein the spring is fixed by one end to the first part and by another end to the second part, the relative position of the first part and the second part allowing the translation spring to be put into compression or tension.

14. The displacement device according to one of claims 11 to 13, comprising a shroud covering at least the translation spring and forming the first part or the second part.

15. The displacement device according to anyone of claims 1 to 14, wherein the support is a ring intended to be mounted about the first upper molar and/or wherein the displacement device comprises a bracket fixed to one or more teeth adjacent to the first upper molar, to which the first end of the rod is fixed.
